# FASCICULE DE BREVET EUROPEEN

(11) **EP 3 109 614 B1**
(45) Date de publication et mention de la délivrance du brevet: **24.07.2019**
(21) Numéro de dépôt: 16175621.8
(22) Date de dépôt: 22.06.2016
(51) Int. Cl.: G01N 1/28, G01N 1/32, C01B 33/021

(54) **PROCEDE DE CROISSANCE DE NANOMATERIAU SUR LAME MINCE**
WACHSTUMSVERFAHREN VON NANOMATERIAL AUF EINER DÜNNEN KLINGE
METHOD FOR GROWING NANOMATERIAL ON A THIN LEAF

(30) Priorité: 24.06.2015 FR 1555820
(43) Date de publication de la demande: 28.12.2016
(73) Titulaire: COMMISSARIAT À L'ÉNERGIE ATOMIQUE ET AUX ÉNERGIES ALTERNATIVES, 75015 Paris (FR)
(72) Inventeur: BERNIER, Nicolas, 38700 Le Sappey en Chartreuse (FR); DANSAS, Hugo, 38960 SAINT ETIENNE DE CROSSEY (FR)
(74) Mandataire: Esselin, Sophie

(56) Documents cités:
- FR-A1- 2 932 313
- US-A- 6 042 736
- US-A1- 2013 319 849
- US-B1- 6 527 967
- OMINAMI Y ET AL: "Bottom-up sample preparation technique for interfacial characterization of vertically aligned carbon nanofibers", ULTRAMICROSCOPY, ELSEVIER, AMSTERDAM, NL, vol. 106, no. 7, 1 mai 2006 (2006-05-01), pages 597-602, XP027887505, ISSN: 0304-3991 [extrait le 2006-05-01]

## Description

Le domaine de l'invention concerne les techniques de croissance de nanomatériau sur lame mince. L'un des intérêts majeurs de ces techniques réside dans la possibilité d'analyser la morphologie à l'échelle nanométrique, typiquement par microscopie électronique en transmission (MET), de matériaux fragiles (nanotubes de carbone, nanofils de silicium, couche de graphène,...) ne supportant aucune manipulation.

Il existe actuellement des instruments permettant de définir des lames de faibles épaisseurs, typiquement de l'ordre de quelques centaines de nanomètres pour mener à bien des observations en transmission.

Notamment, un instrument particulièrement performant peut être utilisé, il s'agit d'un instrument « FIB » correspondant à l'acronyme « Focused Ion Beam », constitué d'une colonne ionique montée dans un microscope électronique à balayage. Le faisceau d'ions permet notamment d'usiner un échantillon afin de l'amincir. La gravure ionique est suivie in situ par imagerie électronique. Les machines FIB travaillent généralement avec des ions gallium d'énergie comprise entre 1.5 et 30 kV. La taille de la sonde ionique est de l'ordre de 5 nm. Une source d'évaporation métallique (platine, tungstène, ...) est incluse dans l'appareil pour déposer un film protégeant la surface à usiner. Le FIB peut être équipé d'un micromanipulateur interne pour l'extraction de la lame.

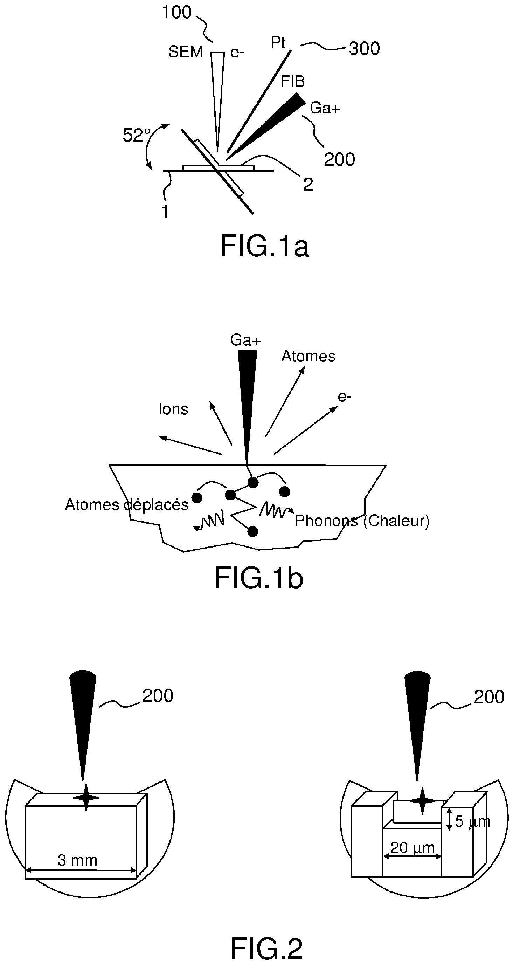

Un instrument particulièrement performant a été développé afin de combiner l'observation et la gravure composée d'une colonne électronique 100 et d'une colonne ionique 200, l'angle entre les deux colonnes est de 52°, comme schématisé en figure 1a. Une platine eucentrique 1 (la position eucentrique correspondant à l'endroit où coïncident les faisceaux) est capable d'amener l'échantillon 2 orthogonal à l'un ou l'autre des deux faisceaux. Des injecteurs de gaz 300 (aiguille d'injection d'un précurseur à base de Pt par exemple) permettent d'assister la gravure ou de réaliser des dépôts localisés.

L'instrument comprend ainsi plus précisément :
- une colonne électronique servant à imager un échantillon sans le dégrader ;
- une colonne ionique servant à pulvériser de la matière comme illustré en figure 1b ;
- un injecteur de gaz (pouvant être du platine, ou du tungstène) servant à réaliser une couche de protection et/ou coller l'échantillon sur un support.

Il est ainsi déjà connu qu'à partir d'un échantillon massif, on peut réaliser une première lame mince d'échantillon par gravure comme illustré en figure 2 qui montre la réalisation d'une lame mince à partir d'un substrat massif, par gravure à l'aide d'un faisceau ionique 200. Il est indiqué des exemples de dimensions pouvant être atteintes, typiquement des motifs de quelques microns.

Il a été décrit dans la demande de brevet US 2013/319849 d'utiliser du tungstène ou du carbone ou dans le brevet US 6 527 967 du phénantrène ou bien encore dans la demande de brevet FR 2 932 313 de déposer une première couche de SiO2 ou de carbone et une deuxième couche de tungstène ou de platine pour prévenir des dommages durant une opération de gravure FIB.

Une lame mince peut alors être extraite du substrat dans laquelle elle a été formée, via la pointe d'un micromanipulateur, qui peut également venir la positionner sur un support pouvant typiquement être une grille de microscope électronique en transmission, couramment désigné par l'acronyme MET. Ainsi la pointe, non représentée sert de véhicule à ladite lame épaisse, cette pointe étant plus ou moins parallèle à l'injecteur de gaz.

La colonne ionique peut être utilisée à nouveau pour amincir la lame et obtenir une lame dite mince présentant une épaisseur typiquement inférieure à quelques centaines de nanomètres qui pourra être utilisée en microscopie en transmission.

Il a été décrit dans l'article de Y. Ominami et al., Ultramicroscopy 106 (2006) 597-602 (ou Y. Ominami et al., Nanotechnology 19 (2008) 405302), une technique de croissance de nanoobjets (dans ce cas particulier, des nanofibres de carbone) sur échantillons massifs préalablement amincis localement. Cependant, cette approche présente trois inconvénients majeurs :
- aucune protection n'est déposée sur l'échantillon massif durant l'amincissement ionique, ce qui implique une forte dégradation (amorphisation, implantation ionique...) de la surface extrême de l'échantillon (qui peut être recouvert d'une fine couche de catalyseur, typiquement inférieure à 50nm). Egalement, une forte redéposition du matériau pulvérisé a lieu sur la zone d'intérêt. Il est bien connu dans le domaine de la préparation d'échantillons par gravure obtenue avec un faisceau d'ions focalisés, que l' amincissement d'un échantillon non protégé altère de manière significative la structure du matériau initial et ainsi entraîne de nombreux artéfacts ;
- le fait de ne pas pouvoir protéger la surface contraint les auteurs à amincir plus vite, et donc à travailler en bord d'échantillons. La zone analysée est donc moins représentative de la zone centrale de l'échantillon massif qui est plus communément utilisée en préparation d'échantillons (zone considérée comme la plus représentative du matériau) ;
- l'échantillon massif doit ensuite être directement introduit dans le microscope électronique en transmission MET, ce qui implique une forte rotation de l'échantillon dans le microscope pour visualiser les nanomatériaux. Cette forte rotation entraîne de nombreux artéfacts de projection et empêche une visualisation claire de l'interface entre le substrat et les nanomatériaux. De plus, dans le cas de nanoobjets pouvant présenter de très fortes longueurs (typiquement supérieures à 1µm), des nanoobjets provenant de zone(s) voisine(s) peuvent se juxtaposer avec les nanoobjets d'intérêt en termes d'observation, rendant l'analyse encore plus compliquée.

Il a également déjà été décrit dans l'article de M. Caplovicova et al., Ultramicroscopy 107 (2007) 692-697, une méthode d'extraction par réplique des nanomatériaux pour leur visualisation par MET. Dans ce cas, toute information sur les rapports d'interface entre le substrat et les nanomatériaux n'est pas accessible.

Les articles de J.B. Park et al., Thin Solid Films 415 (2002) 78-82. Et E. Müller et al., Ultramicroscopy 84 (2000) 143-147 présentent d'autres approches pour l'analyse microstructurale de nanoobjets qui obligent toutefois à la manipulation (par amincissement ionique par exemple) des échantillons recouverts de nanoobjets.

De manière générale, pour l'analyse morphologique par MET de matériaux fragiles ne supportant aucune manipulation, comme les nanotubes de carbone (NTC), les préparations d'échantillons standards ne peuvent être employées. En effet, dans le cadre des techniques usuelles comme le grattage sur grille MET ou de dispersion en solution, les NTC ont tendance à s'agglomérer sur la grille et l'information sur la localisation du catalyseur est perdue. De même, par des techniques de croissance sur grille, la caractérisation du catalyseur avec le substrat est impossible et l'équivalence pleine couche/échantillon mince est peu respectée. Dans ce contexte, le Demandeur a développé une nouvelle technique de préparation de lame mince utilisant une technique de gravure par faisceau d'ions focalisés (FIB) et destinée à servir de support à la croissance de nanomatériau palliant les inconvénients précités, permettant par la même l'observation de nanomatériau par microscope électronique en transmission (MET).

Plus précisément la présente invention a pour objet un procédé de croissance de nanomatériau sur lame mince présentant une épaisseur pouvant typiquement être inférieure à environ quelques centaines de nanomètres, caractérisé en ce qu'il comprend :
- le dépôt d'une couche de résine sur un substrat ;
- ledit substrat étant recouvert d'une couche de matériau actif de catalyseur destiné à la croissance de nanomatériau sur laquelle est déposée la couche de résine ;
- le dépôt d'une couche protectrice à la surface de ladite couche de résine ;
- la gravure locale de la couche protectrice, de la résine et du substrat de manière à définir une lame mince dans ledit substrat ;
- le retrait de l'ensemble couche protectrice/ couche de résine, à la surface de ladite lame mince ;
- la croissance de nanomatériau sur ladite lame mince prédéfinie.

Typiquement, l'épaisseur de ladite lame mince peut être inférieure à environ quelques centaines de nanomètres.

Selon des variantes de l'invention, la gravure est une gravure ionique.

Selon des variantes de l'invention, la gravure est une gravure plasma.

Selon des variantes de l'invention, le procédé comprend une opération de retrait mécanique de l'ensemble couche protectrice/ couche de résine pouvant être effectuée avec une pièce mécanique pouvant être une pointe.

Selon des variantes de l'invention, le procédé comprend une étape préalable de définition d'une entaille dans l'ensemble couche protectrice/ couche de résine de manière à fragiliser ledit ensemble, avant l'opération de retrait mécanique.

Selon des variantes de l'invention, le dépôt de couche protectrice sur la résine est réalisé par dissociation de molécules gazeuses par faisceau ionique ou électronique.

Selon des variantes de l'invention, le procédé comprend une étape de durcissement de ladite résine, permettant de la consolider.

Selon des variantes de l'invention, le procédé comprend la croissance de nanoobjet(s) après le retrait de l'ensemble couche protectrice/ couche de résine, à la surface de ladite lame mince.

Selon des variantes de l'invention, les nanoobjets sont des nanotubes de carbone, la couche de matériau actif pouvant être en élément métallique pouvant être du fer.

Selon des variantes de l'invention, les nanoobjets sont des nanofils de silicium, la couche de matériau actif pouvant être en élément métallique pouvant être du cuivre ou de l'or.

Selon des variantes de l'invention, le nanomatériau est du graphène, la couche de matériau actif pouvant être en carbure de silicium.

Selon des variantes de l'invention, la couche protectrice est une couche en métal pouvant être en tungstène ou en platine.

Selon des variantes de l'invention, l'épaisseur de la couche protectrice est de l'ordre de 1 à 2 microns.

Selon des variantes de l'invention, l'épaisseur de couche de résine est comprise entre environ 0,5 micron et 1,5 micron.

Selon des variantes de l'invention, le procédé comprend :
- une opération de gravure de l'ensemble : couche protectrice, de la résine et du substrat, pour définir une lame dans ledit substrat ;
- l'extraction de ladite lame dudit substrat ;
- le report de ladite lame mince sur un support ;
- la croissance de nanomatériau sur ladite lame prédéfinie et reportée sur ledit support.

Selon des variantes de l'invention, le support est une grille de MET.

Selon des variantes de l'invention, le procédé peut comprendre une première opération de gravure puis une seconde opération de gravure, pour définir une première lame, puis une lame mince à partir de la première lame amincie lors de la seconde opération de gravure.

Selon des variantes de l'invention, la première lame peut être ainsi à nouveau gravée pour l'amincir davantage en une lame mince, après report sur ledit support et avant l'opération de croissance de nanomatériau.

Selon des variantes de l'invention, l'opération d'extraction est réalisée par soudure et actionnement d'une pointe sur ladite lame mince ou ladite première lame.

Selon des variantes de l'invention, ledit report est effectué par soudure sur ledit support.

L'invention sera mieux comprise et d'autres avantages apparaîtront à la lecture de la description qui va suivre donnée à titre non limitatif et grâce aux figures annexées parmi lesquelles :
- les figures 1a et 1b illustrent les faisceaux électronique et ionique utilisés dans un instrument FIB de l'art connu ;
- la figure 2 illustre la réalisation d'une lame mince depuis un substrat massif par FIB selon l'art connu ;
- les figures 3a et 3b illustrent la réalisation d'une lame mince selon la présente invention, comportant le dépôt d'une couche de résine en dessous d'une couche de protection ;
- les figures 4a et 4b illustrent une grille de MET, avec une lame mince reportée et réalisée selon le procédé de l'invention ;
- les figures 5a et 5b illustrent les étapes de retrait des couches de protection et de résine et la croissance de nanotubes dans un exemple de procédé de fabrication de l'invention ;
- les figures 6a et 6b sont relatives à des images respectivement de MEB et MET de la lame préparée par FIB sur laquelle ont été synthétisés des NTC ;
- les figures 7a à 7e mettent en évidence des images prises lors de différentes étapes nécessaires à la gravure dans un procédé selon la présente invention ;
- la figure 8 est relative à des images MET des NTC produits sur la lame FIB permettant notamment de localiser le catalyseur (a) à la racine du NTC, (b) à la pointe du NTC, (c) dans le corps du NTC, (d) à la surface de la lame et entourée de graphite ;
- la figure 9 illustre une image MET haute-résolution d'un NTC synthétisé sur lame FIB.

De manière générale, selon le procédé de l'invention, on réalise une lame mince à partir d'un échantillon massif et ce par gravure pouvant être ionique ou plasma dans une chambre de gravure.

A partir d'un échantillon massif, pouvant être recouvert d'une couche de matériau actif utile à la croissance de nanomatériau, on procède à une opération de gravure.

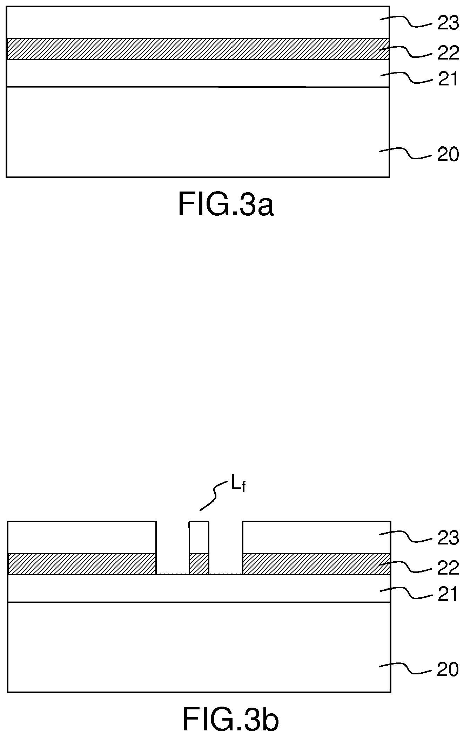

Pour cela, un substrat 20 est recouvert d'une couche de matériau actif 21 destiné à une fonction de catalyseur pour la croissance de nanomatériau. Selon la présente invention, une couche de résine 22 est déposée au dessus du substrat au dessus de la couche 21, comme illustré en figure 3a.

La couche de résine 22 est elle-même recouverte et protégée par une couche de protection 23.

L'ensemble ainsi constitué est gravé afin d'y définir une lame fine L_{f} comme illustré en figure 3b.

Dans la suite de la description, il est fait référence à un procédé de gravure ionique sans que cela soit restrictif. Dans ce cas, on procède à une opération de gravure ionique à partir d'un échantillon massif, permettant de définir une lame mince pouvant typiquement présenter des dimensions de l'ordre de 10µmx5µm et d'épaisseur d'environ 100 nm. Cette gravure peut être réalisée par FIB, par pulvérisation par ions gallium accélérés à 30kV.

Lors d'une préparation FIB standard, l'utilisateur peut déposer une couche supposée protéger l'extrême surface du matériau au dommage engendré par le bombardement des ions Gallium (implantation, amorphisation, redéposition...). Cette couche de protection (en Pt, W, C, SiO₂..., est déposée par dissociation de molécules gazeuses par faisceau d'électrons ou d'ions. Les espèces ainsi dissociées présentent une énergie non nulle et modifient peu l'extrême surface. Néanmoins, la bonne adhésion entre le matériau de surface et la couche de protection ne permet pas un retrait aisé de cette couche.

Selon la présente invention, il est proposé d'utiliser un ensemble de couches qui permet, d'une part, de protéger la surface durant la préparation de lame mince, et d'autre part, de remettre à nu le matériau sur lequel sera réalisée la croissance ultérieure de nanomatériau ou de nanoobjets. L'objectif peut être atteint en ajustant les paramètres de gravure.

Il est à noter que dans l'ensemble de la présente description, la notion de croissance de nanomatériau ou de nanoobjets est une notion générique pouvant couvrir des croissances successives de nanomatériaux de natures différentes.

Afin de prévenir de toute pulvérisation ou d'amorphisation du matériau actif (encore appelé couramment catalyseur) en surface, une couche de protection en résine est déposée avant le processus de gravure.

Une telle couche, exposée serait en revanche rapidement consommée durant le processus de gravure dans une machine de FIB.

Ainsi, selon la présente invention, on utilise une couche de résine en tant que couche intercalaire entre la surface du matériau actif et une couche de protection déposée dans la machine de FIB. Pour optimiser l'adhésion avec la résine, la couche de protection est déposée par dissociation de molécules gazeuses par faisceau ionique. L'épaisseur de la couche de résine peut typiquement être d'environ 0.5 à 1.5 µm. Ce choix d'épaisseur réside dans le fait que la couche de résine doit être assez épaisse pour protéger la surface en matériau et assez fine pour une bonne tenue mécanique de la lame durant la pulvérisation ionique dans la machine de FIB.

L'épaisseur de la couche protectrice pouvant typiquement être en tungstène peut mesurer également approximativement 1 à 2 µm.

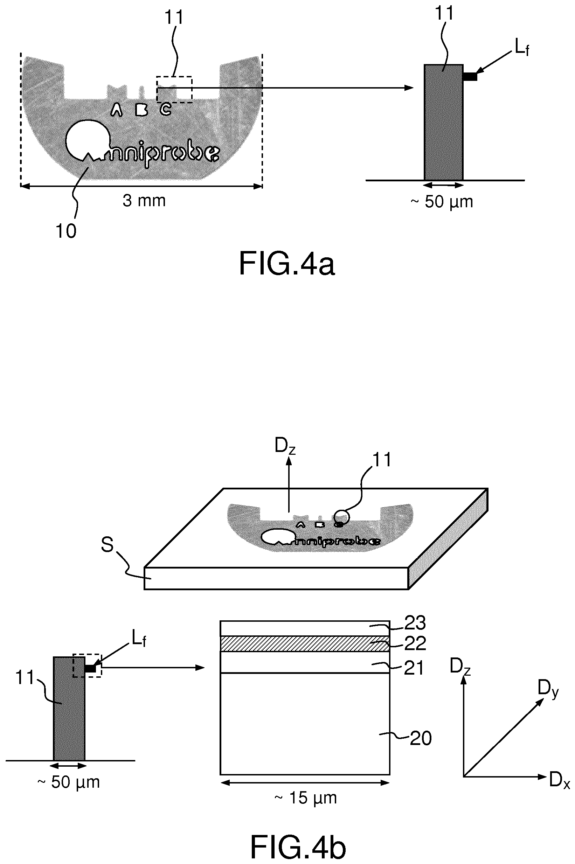

Après amincissement complet de la lame, la bicouche résine/couche protectrice doit être retirée. En effet, afin de pouvoir procéder à la croissance de nanomatériau, il est nécessaire de pouvoir dégager la surface de matériau sur laquelle est réalisée l'opération de croissance. Pour ce faire, et selon une variante avantageuse de la présente invention, il est possible d'effectuer ce retrait de l'ensemble couche de protection/ résine par une action mécanique. A cet effet, il est proposé dans la présente invention, d'utiliser la pointe du microactionneur présent dans la machine de FIB pour pousser et retirer la bicouche, comme illustré en figure 4a et 4b et ce dans le cadre d'une lame déposée à la surface du doigt d'une grille MET, telle qu'une grille de la société Omniprobe utilisée en observation MET.

Plus précisément, la figure 4a, met en évidence une telle grille Omniprobe 10, comportant en surface 3 doigts référencés en position A, B et C. Une lame L_{f} préalablement réalisée par FIB est reportée sur le doigt 11, pouvant typiquement présenter une largeur d'une cinquantaine de microns, alors que la largeur de ladite grille présente une dimension de 3 mm.

La figure 4b, illustre le positionnement de ladite grille sur un support destiné à la croissance ultérieure de nanomatériau selon un axe de croissance Dz.

La figure 4b met également en évidence, une vue agrandie de ladite lame Lf et de l'empilement de couches 21/22/23.

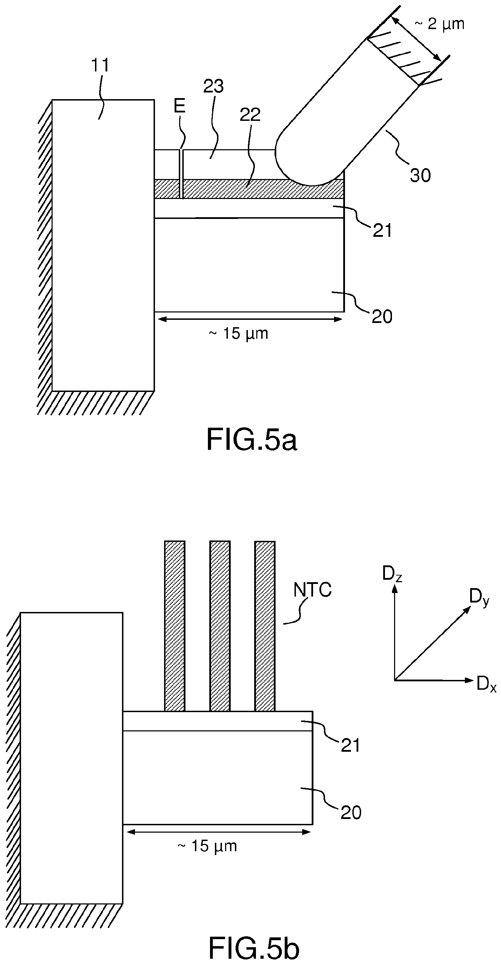

Pour réaliser cette action mécanique, on peut avantageusement procéder à la réalisation d'une entaille préalable E, par exemple par pulvérisation ionique en bout de la lame au niveau de la couche de résine 22 résine et de la couche de protection 23, comme représenté en figure 5a.

Le Demandeur a effectué des essais qui prouvent la faisabilité d'une telle opération. La résine peut être ainsi dissociée de manière très propre du matériau.

La surface de croissance est ainsi dégagée pour procéder de manière classique à la croissance de nanomatériau et de nanoobjets sur la lame mince préalablement réalisée.

La figure 5b est une représentation schématique, en effet la couche 21 va « démouiller » durant la croissance, i.e. former des gouttes liquides à la surface à haute température. Ce sont sur ces gouttes que vont se former les NTC. On n'y aura donc plus une couche continue du catalyseur après croissance.

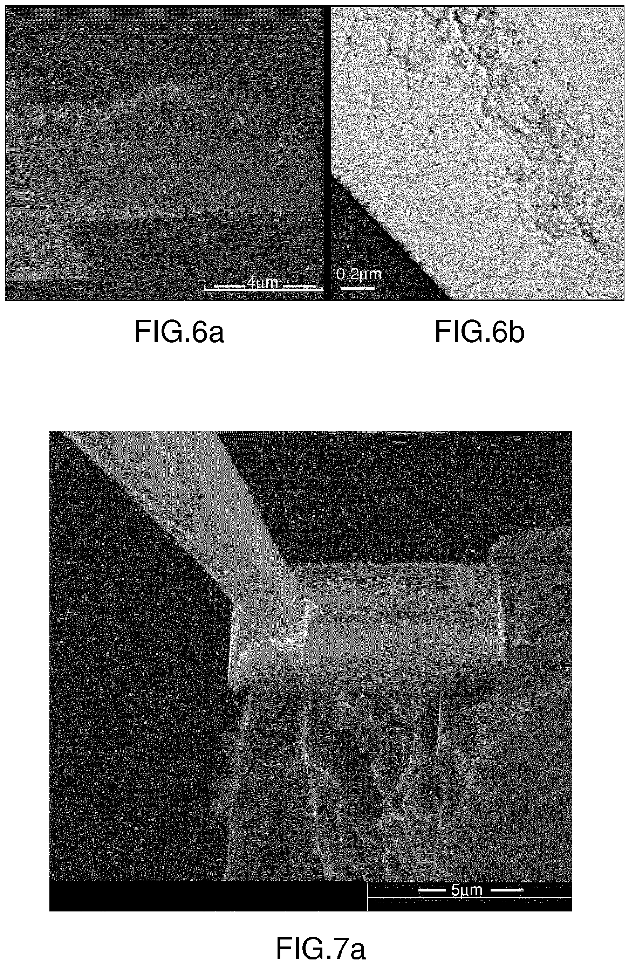

Les figures 6a et 6b sont relatives à des images respectivement de MEB et MET de la lame préparée par FIB sur laquelle ont été synthétisés des NTC. D'après ces observations, il apparait que les NTC synthétisés sur lames FIB présentent les mêmes caractéristiques (diamètre, longueur, nombre de parois) que ceux produits sur échantillon massif, garantissant ainsi que les observations réalisées par MET soient représentatives des échantillons réels.

L'équivalence obtenue en termes de résultats de croissance obtenus sur la lame mince réalisée par gravure (encore dénommé échantillon mince) et sur échantillon massif, peut être expliquée par la conservation de la structure du catalyseur durant le processus de gravure, mais aussi par l'absence de traitement de préparation entre la croissance et l'observation des NTC, permettant ainsi de préserver la structure cristalline des NTC.

Avantageusement, il est possible de réaliser deux opérations de gravure avant la réalisation de croissance de nanomatériau, afin de pouvoir positionner dans un premier temps une lame pas trop fine et donc plus facilement manipulable sur une grille MET, puis d'affiner cette lame, pour procéder in fine à l'observation. Selon cette réalisation, la lame positionnée sur le doigt de grille telle que représentée en figures 4a-4b et 5a-5b, peut être affinée selon l'axe Dy, la direction d'observation du MET étant également cet axe Dy. L'amincissement est réalisé avec la couche de protection présente.

### Exemple de procédé selon l'invention réalisé en vue d'une observation par MET :

La préparation consiste à prélever sur une plaque une lame et à la placer sur une grille porte spécimen pour l'affiner sous le faisceau ionique jusqu'à une épaisseur inférieure pouvant être de l'ordre de 100 nm. La grille sera ensuite placée sur la canne d'introduction du MET pour l'observation, la procédure pouvant être automatisée.

Les principales étapes du procédé selon l'invention sont détaillées ci-après dans le cadre de l'utilisation d'une grille développée par la société Omniprobe présentant 3 doigts référencés A, B et C et telle qu'illustrée précédemment et constituant le support sur lequel sera positionné la lame mince préalablement obtenue et qui permettra de faire des observations MET.

Par rapport aux techniques usuelles de préparation d'échantillons pour l'observation en MET (grattage sur grille, dispersion en solution, croissance sur grille), la croissance sur lames minces permet de s'affranchir de nombreux inconvénients :
- pas de détérioration ou d'agglomération des nanoobjets sur le support avant observation MET ;
- des informations précises sur la localisation du catalyseur ;
- une caractérisation possible du « pied » des nanoobjets.

Une lame mince (10µmx5µm et épaisseur environ 100 nm) est extraite par FIB (pulvérisation par ions gallium accélérés à 30kV) d'un échantillon massif sur lequel est préalablement déposée une couche de catalyseur.

Cette lame mince est ensuite collée à une grille Omniprobe, afin de procéder à une observation des nanoobjets formés.

Afin de prévenir de toute pulvérisation ou amorphisation du catalyseur en surface, une couche de protection est déposée avant le processus de gravure puis est retirée juste avant l'étape de croissance.

Afin de s'assurer de l'équivalence échantillon massif - échantillon mince, la partie de la grille sur laquelle est collée la lame est tordue à environ 90° afin de placer la lame mince dans la même orientation que l'échantillon massif dans la chambre de croissance.

Les principales étapes sont résumées ci-après :
Etape A : Dépôt de la résine sur l'échantillon massif ;
Etape B : Préparation d'une lame FIB « classique » ;
Etape C : Retrait de la résine sur la lame mince obtenue par FIB pour mettre à nu la couche de catalyseur ;
Etape D : Torsion sous micromanipulateur du doigt de la grille Omniprobe ;
Etape E : Croissance des nanoobjets sur la lame FIB ;
Etape F : Torsion sous micromanipulateur pour remettre droit le doigt de la grille.

### Etape A : Dépôt de la résine sur l'échantillon massif :

On utilise de la résine qui peut typiquement être la résine commerciale Accuglass ® T-12B de Honeywell, l'échantillon à enduire de résine est déposé sur une plaque de silicium. Typiquement, on peut utiliser une pipette afin de prélever une goutte déposée à la surface de l'échantillon, afin de déposer une couche d'environ 400 nm d'épaisseur. La goutte est étalée, puis l'on dispose la plaquette de silicium dans une étuve portée à une température de l'ordre de 100°C à 120°C, durant environ 2 heures. La cuisson de la résine permet de la durcir afin de pouvoir la manipuler ultérieurement.

### Etape B. Préparation d'une lame FIB « classique » :

On peut régler l'eucentricité et orienter l'échantillon à 52°, comme présenté selon l'art connu, pour procéder à une opération de gravure ionique via le faisceau 200 tel que représenté en figure 1.

On réalise le dépôt de la couche protectrice, pouvant typiquement être en tungstène, dont les dimensions du dépôt sont les suivantes selon les trois axes :
X = 8 µm, Y = 1.5 µm et Z = 3 µm
l'épaisseur de la couche de protection est de 3 µm.

Avec un courant de 0.28 nA, le dépôt prend environ 5 minutes.

On peut lancer des conditions opératoires de gravure.

Il est intéressant de partir typiquement d'une lame par exemple de longueur 5 µm et de définir une profondeur 8 µm. Le choix d'une profondeur de 8 µm permet d'obtenir une lame par gravure FIB présentant un substrat volumineux et donc plus résistant à la force appliquée par la pointe Omniprobe en tungstène qui pourra être utilisée lors du retrait de la résine, comme il sera explicité ci-après dans la présente description.

A la fin de l'opération de gravure on insère la pointe du micromanipulateur de la marque Omniprobe et on la met en contact avec la lame.

En effet, afin de prélever et déplacer les échantillons au sein même de la chambre de l'équipement on peut utiliser un micromanipulateur de marque Omniprobe. Il est constitué d'un système d'introduction et de déplacement selon 3 axes (dans le repère lié à la pointe) d'une fine pointe de tungstène, avec une précision de déplacement nanométrique.

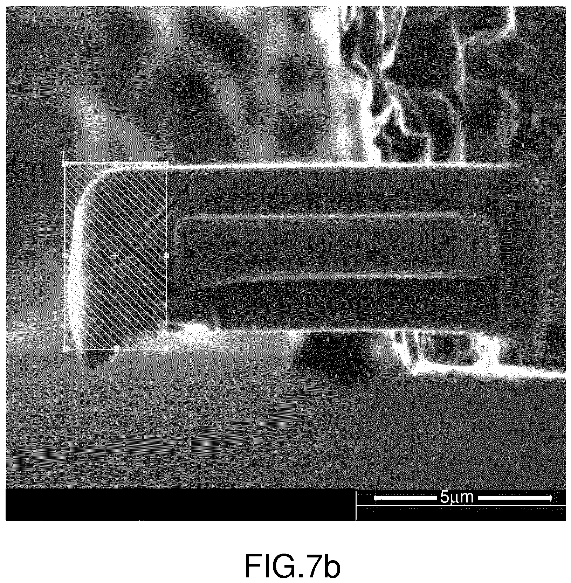

La figure 7a illustre une prise de vue de la pointe du micromanipulateur utilisé pour positionner ladite lame extraite contre un doigt de grille MET. Le dépôt supérieur de W recouvre une partie de la surface, la partie gauche est retirée en figure 7b et la partie droite reste épaisse pour la tenue mécanique de la lame. La pointe est en contact avec un flanc de la lame, avec un tout petit dépôt de W entre les deux.

La figure 7b illustre une image de la zone à graver lors d'une seconde opération de gravure (la partie gauche épaisse sert seulement à manipuler la lame lors de son déplacement, ensuite on retire cette partie), identifiée par un rectangle.

En utilisant l'imagerie électronique et ionique on obtient une perspective qui permet de contrôler les déplacements dans les 3 dimensions spatiales. La pointe en W sera observée, soudée et coupée au cours de l'utilisation, en appliquant des courants ad hoc.

Ainsi, dans un exemple de procédé de l'invention, la pointe du micromanipulateur Omniprobe associé à la colonne ionique peut permettre de récupérer les lames préalablement définies dans un échantillon épais

Il est installé à demeure dans la chambre du microscope. On peut avantageusement souder la pointe du micromanipulateur à l'objet à récupérer, puis découper pour désolidariser la lame de la pointe et la déposer sur la grille du microscope.

On dépose un peu de tungstène à cheval entre la pointe et la première lame réalisée par gravure.

On vient alors déplacer la pointe en Y afin de détacher complètement la première lame de l'échantillon massif.

On monte ensuite la pointe en Z afin d'extraire cette première lame.

On déplace la pointe vers une grille Omniprobe (en molybdène si celle-ci doit subir un traitement ultérieur à haute température).

On dépose du tungstène pour coller la première lame sur un des doigts de la grille.

En utilisant les beam shift de la colonne FIB, on focalise la sonde de gallium sur le tungstène entre la lame et la pointe.

Après quelques secondes la première lame peut être détachée. Cette technique permet de préserver l'état de la pointe Omniprobe.

On grave la première lame, afin de définir une lame fine, destinée à la croissance de nanomatériau.

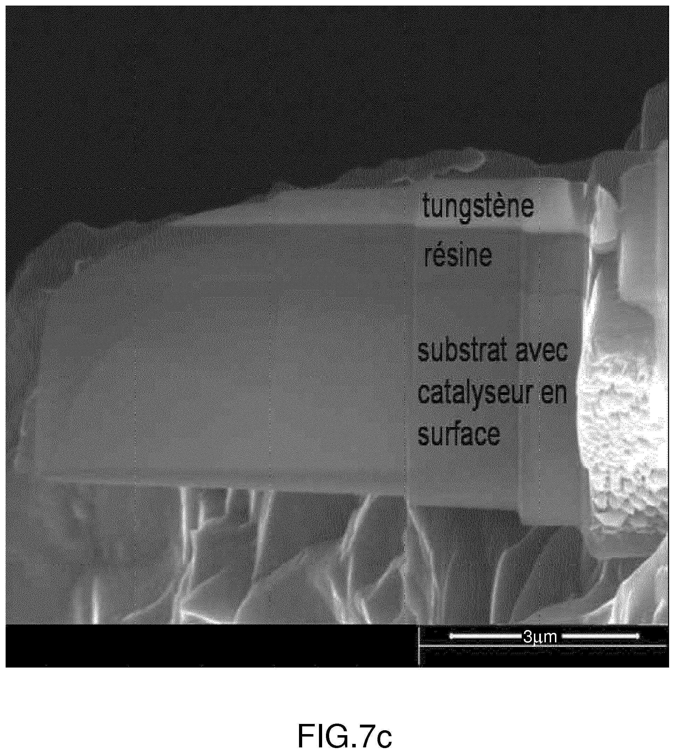

La figure 7c illustre à cet effet, une image prise de l'empilement : couche de tungstène/résine/substrat avec couche de catalyseur en surface de la lame affinée, d'épaisseur inférieure typiquement à 100 nm en bout de lame.

### Etape C : Retrait de la résine sur la lame FIB pour mettre à nu le catalyseur :

On oriente la lame à 52° puis on insère la pointe Omniprobe.

On déplace la pointe Omniprobe telle qu'elle soit en contact avec la lame, juste au-dessus de l'interface substrat-résine.

On réalise une image de la lame avec la source de gallium à un courant de 28 pA.

On dispose un rectangle de gravure sur la lame obtenue par FIB. On peut typiquement choisir alors une profondeur d'environ 100 nm, correspondant à un temps de gravure de l'ordre de 1 seconde.

On réalise une image électronique de la lame mince ainsi obtenue après gravure. La gravure doit être assez profonde pour entraîner une fissure dans la résine sans toutefois fissurer le substrat. Dans le cas où la fissure n'est présente que dans le tungstène, on peut recommencer un cycle de gravure.

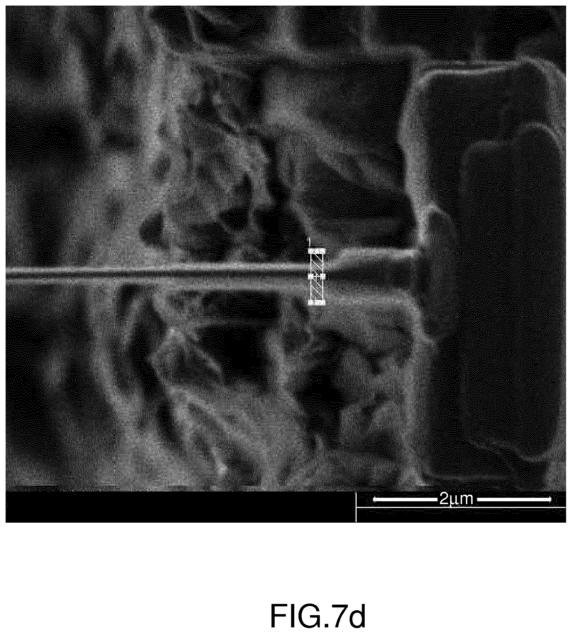

La figure 7d illustre une image FIB, le carré représenté correspond au lieu de gravure permettant d'amorcer une fissure dans la résine afin d'en faciliter le retrait.

Cette étape est conditionnante pour retirer la résine : une fissure pas assez profonde entraîne un décollement partiel de la résine et une fissure trop profonde entraîne la cassure de la lame.

On déplace la pointe en Y afin d'exercer une pression sur la résine jusqu'à temps qu'elle se décolle.

### Etape D : Torsion sous micromanipulateur du doigt de la grille Omniprobe :

Cette opération est destinée à présenter selon une orientation adaptée, le doigt de grille sur lequel est placée la lame fine destinée à servir de support à la croissance des NTC, par rapport à la direction de croissance desdits NTC. Lorsque la grille est déposée sur un plan (Dx,Dy), la direction de croissance Dz correspond à la normale au flanc de la lame. Après torsion de 90° autour de l'axe Dy, la direction de croissance Dz devient normale à la surface du film de catalyseur.

On approche la pointe du micromanipulateur sur l'un des doigts (A ou C de préférence) de la grille Omniprobe.

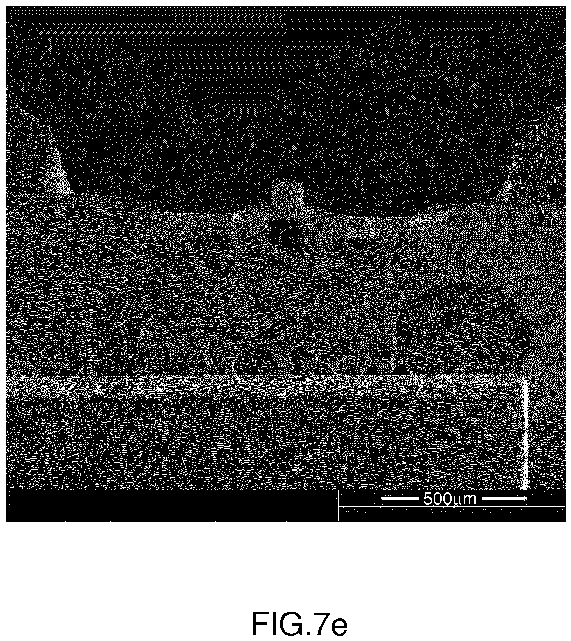

La figure 7e montre ainsi des doigts distordus de la grille.

On exerce une pression du haut vers le bas de la pointe sur le doigt. La pointe exerce la pression sur le doigt C « côté extérieur de la grille » puisque la lame est collée sur le doigt C « côté doigt B ». De cette manière, la probabilité de toucher la lame avec la pointe reste faible.

On peut alors, retirer la grille, pour la déposer dans un bâti de croissance de nanomatériau.

### E. Croissance des nanoobiets sur la lame FIB

On peut alors procéder de manière connue à la croissance des nanoobjets (sur échantillon massif) en se référant notamment aux conditions décrites dans l'article « How to switch from a tip to base growth mechanism in carbon nanotube growth by catalytic chemical vapour deposition » de Dijon et al., Carbon vol. 48 issue 13 page 3953, doi:10.1016/j.carbon.2010.06.064.

La grille Omniprobe (de préférence en molybdène) doit être orientée de telle façon que les doigts soient relevés.

### F. Torsion sous micromanipulateur pour remettre droit le doigt de la grille :

Cette étape est destinée à positionner les NTC réalisés dans une bonne configuration pour pouvoir être observés par MET.

Après réalisation de toutes les étapes décrites ci-dessus, les NTC sont ainsi directement observables par MET.

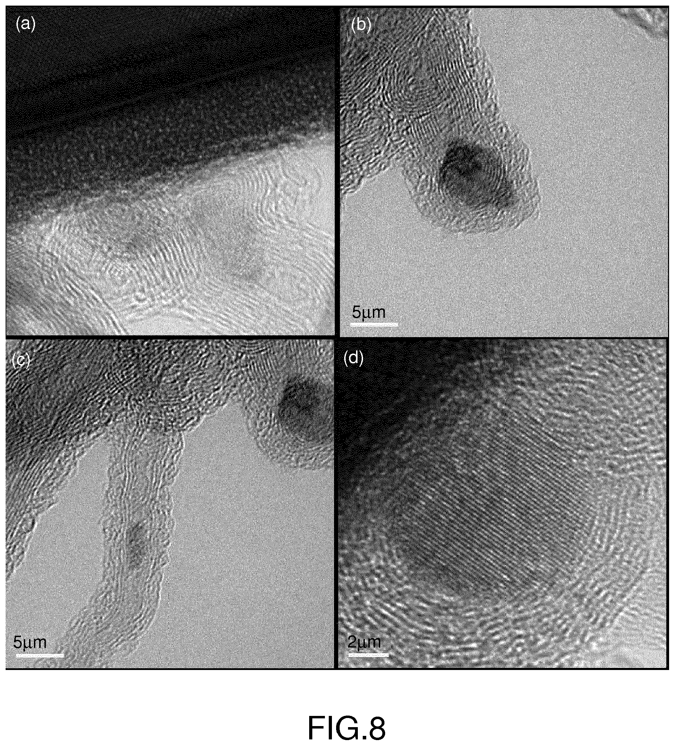

La figure 8 montre quelques exemples d'images MET obtenues sur ces NTC synthétisés sur une lame FIB, selon le procédé de l'invention. D'une part, la structure cristallographique des NTC, correspondant à une distance inter-réticulaire entre les plans (002) de l'ordre de 0.35 nm, est clairement résolue. Il est également intéressant de noter que l'absence de traitements entre les étapes de croissance et d'observation permet de réduire considérablement l'épaisseur de gangue amorphe entourant les NTC. On entend par traitements : des traitements chimiques, comme la dispersion des NTC dans des solutions chimiques, qui produisent sous le faisceau électronique l'apparition de couches amorphes entourant les NTC.

D'autre part, la technique de préparation de croissance sur lames minces permet de précisément localiser le catalyseur et d'étudier sa structure.

Ainsi, les NTC montrés en figure 8 carré (a) ont subi une croissance par la racine alors que les NTC montrés en figure 8 carré (b) ont subi une croissance par la pointe.

De même, une partie du catalyseur est localisée dans le corps de certains NTC, à l'image de la figure 8 carré (c). De même, dans la figure 8 carré (d), il devient possible d'étudier la structure cristalline de la particule de fer lorsqu'elle est entièrement recouverte de graphite. Dans ce cas, la croissance des NTC est généralement avortée.

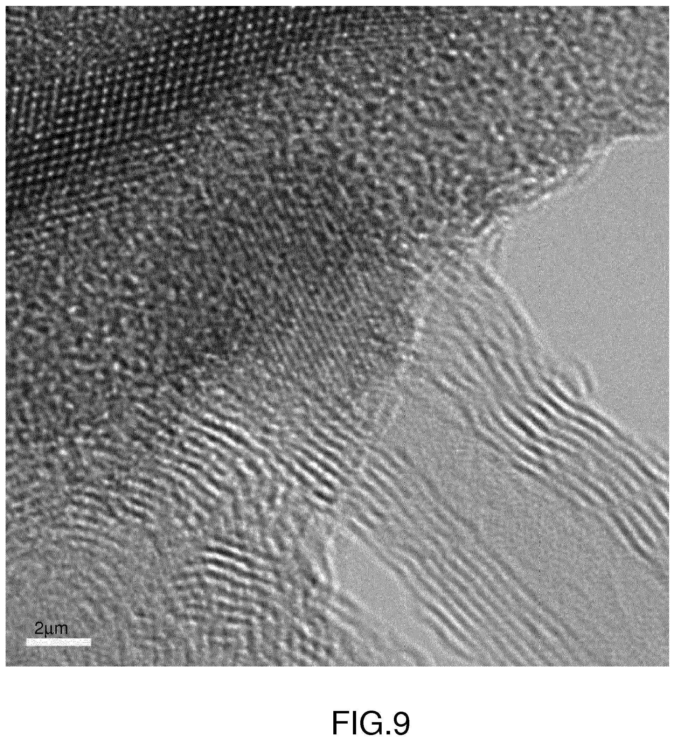

En conclusion, la réalisation d'une lame FIB transparente aux électrons présente de nombreux avantages par rapport aux techniques usuelles données dans la littérature. Notamment, elle permet de caractériser l'interface substrat - catalyseur - NTC, comme illustré en figure 9, avec une particule cristalline de fer comme catalyseur, apportant des informations supplémentaires à la compréhension des mécanismes de croissance des NTC.

## Revendications

1. Procédé de croissance de nanomatériau sur lame mince, présentant une épaisseur pouvant typiquement être inférieure à environ quelques centaines de nanomètres **caractérisé en ce qu'**il comprend :
- le dépôt d'une couche de résine (22) sur un substrat (20) ;
- ledit substrat étant recouvert d'une couche de matériau actif de catalyseur (21) destiné à la croissance de nanomatériau, sur laquelle est déposée la couche de résine ;
- le dépôt d'une couche protectrice (23) à la surface de ladite couche de résine ;
- la gravure locale de la couche protectrice, de la résine et du substrat de manière à définir une lame mince dans ledit substrat ;
- le retrait de l'ensemble couche protectrice/ couche de résine, à la surface de ladite lame mince ;
- la croissance de nanomatériau sur ladite lame mince prédéfinie.

2. Procédé de croissance de nanomatériau sur lame mince selon la revendication 1, **caractérisé en ce que** la gravure est une gravure ionique.

3. Procédé de croissance de nanomatériau sur lame mince selon la revendication 1, **caractérisé en ce que** la gravure est une gravure plasma.

4. Procédé de croissance de nanomatériau sur lame mince selon l'une des revendications 1 à 3, **caractérisé en ce qu'**il comprend une opération de retrait mécanique de l'ensemble couche protectrice/ couche de résine pouvant être effectuée avec une pièce mécanique pouvant être une pointe.

5. Procédé de croissance de nanomatériau sur lame mince selon la revendication 4, caractérisé en en ce qu'il comprend une étape préalable de définition d'une entaille dans l'ensemble couche protectrice/ couche de résine de manière à fragiliser ledit ensemble avant l'opération de retrait mécanique.

6. Procédé de croissance de nanomatériau sur lame mince selon l'une des revendications 1 à 5, **caractérisé en ce que** le dépôt de la couche protectrice sur la résine est réalisé par dissociation de molécules gazeuses par faisceau ionique ou électronique.

7. Procédé de croissance de nanomatériau sur lame mince selon l'une des revendications 1 à 6, **caractérisé en ce qu'**il comprend la croissance de nanoobjets.

8. Procédé de croissance de nanomatériau sur lame mince selon l'une des revendications 1 à 6, **caractérisé en ce que** les nanoobjets sont des nanotubes de carbone, la couche de matériau actif pouvant être en élément métallique pouvant être du fer.

9. Procédé de croissance de nanomatériau sur lame mince selon l'une des revendications 1 à 6, **caractérisé en ce que** les nanoobjets sont des nanofils de silicium, la couche de matériau actif pouvant être en élément métallique pouvant être du cuivre ou de l'or.

10. Procédé de croissance de nanomatériau sur lame mince selon l'une des revendications 1 à 6, **caractérisé en ce que** le nanomatériau est du graphène, la couche de matériau actif pouvant être en carbure de silicium.

11. Procédé de croissance de nanomatériau sur lame mince selon l'une des revendications 1 à 10, **caractérisé en ce que** la couche protectrice est une couche en métal pouvant être en tungstène ou en platine.

12. Procédé de croissance de nanomatériau sur lame mince selon la revendication 11, **caractérisé en ce que** l'épaisseur de la couche protectrice est de l'ordre de 1 à 2 microns.

13. Procédé de croissance de nanomatériau sur lame mince selon l'une des revendications 1 à 12, **caractérisé en ce que** l'épaisseur de couche de résine est comprise entre environ 0,5 micron et 1,5 micron.

14. Procédé de croissance de nanomatériau sur lame mince selon l'une des revendications 1 à 13, **caractérisé en ce qu'**il comprend :
- une opération de gravure de l'ensemble : couche protectrice, de la résine et du substrat pour définir une lame mince dans ledit substrat ;
- l'extraction de ladite lame mince dudit substrat ;
- le report de ladite lame mince sur un support ;
- la croissance de nanomatériau sur ladite lame prédéfinie et reportée sur ledit support pouvant être une grille MET.

15. Procédé de croissance de nanomatériau sur lame mince selon l'une des revendications 1 à 14, **caractérisé en ce qu'**il comprend :
- une première opération de gravure pour définir une première lame ;
- une seconde opération de gravure, pour définir une lame mince à partir de la première lame amincie lors de la seconde opération de gravure.

16. Procédé de croissance de nanomatériau sur lame mince selon les revendications 14 et 15, **caractérisé en ce que** la seconde opération de gravure est effectuée après le report de ladite première lame sur ledit support et avant l'opération de croissance de nanomatériau.

17. Procédé de croissance de nanomatériau sur lame mince selon l'une des revendications 14 à 16, **caractérisé en ce que** ladite extraction est réalisée par soudure et actionnement d'une pointe sur ladite lame mince ou ladite première lame.

18. Procédé de croissance de nanomatériau sur lame mince selon l'une des revendications 14 à 16, caractérisé en ce ledit report est effectué par soudure sur ledit support.

## Patentansprüche

1. Wachstumsverfahren von Nanomaterial auf einem dünnen Blatt, welches eine Dicke aufweist, welche typischerweise ungefähr einige Hundert Nanometer unterschreiten kann, **dadurch gekennzeichnet, dass** es Folgendes beinhaltet:
- das Ablagern einer Harzschicht (22) auf einem Substrat (20);
- wobei das Substrat mit einer Schicht aus aktivem Katalysatormaterial (21) bedeckt ist, welches zum Wachstum des Nanomaterials bestimmt ist, auf welcher die Harzschicht abgelagert wird;
- das Ablagern einer Schutzschicht (23) an der Oberfläche der Harzschicht;
- das lokale Gravieren der Schutzschicht, des Harzes und des Substrates in einer Weise, dass ein dünnes Blatt in dem Substrat definiert wird;
- das Entfernen der gesamten Schutzschicht/Harzschicht, von der Oberfläche des dünnen Blattes;
- das Wachstum des Nanomaterials auf dem vordefinierten dünnen Blatt.

2. Wachstumsverfahren von Nanomaterial auf einem dünnen Blatt nach Anspruch 1, **dadurch gekennzeichnet, dass** die Gravur eine ionische Gravur ist.

3. Wachstums verfahren von Nanomaterial auf einem dünnen Blatt nach Anspruch 1, **dadurch gekennzeichnet, dass** die Gravur eine Plasmagravur ist.

4. Wachstumsverfahren von Nanomaterial auf einem dünnen Blatt nach einem der Ansprüche 1 bis 3, **dadurch gekennzeichnet, dass** es einen Schritt des mechanischen Entfernens der Anordnung Schutzschicht/Harzschicht beinhaltet, welcher mit einem mechanischen Teil bewerkstelligt werden kann, welches eine Spitze sein kann.

5. Wachstumsverfahren von Nanomaterial auf einem dünnen Blatt nach Anspruch 4, **dadurch gekennzeichnet, dass** es einen vorherigen Schritt der Definition einer Einkerbung in der Anordnung Schutzschicht/Harzschicht in der Weise beinhaltet, dass die Anordnung vor dem Schritt des mechanischen Entfernens fragilisiert wird.

6. Wachstums verfahren von Nanomaterial auf einem dünnen Blatt nach einem der Ansprüche 1 bis 5, **dadurch gekennzeichnet, dass** das Ablagern der Schutzschicht auf dem Harz durch Trennung von gasförmigen Molekülen mittels Ionen- oder Elektronenstrahl erfolgt.

7. Wachstumsverfahren von Nanomaterial auf einem dünnen Blatt nach einem der Ansprüche 1 bis 6, **dadurch gekennzeichnet, dass** es das Wachstum von Nanoobjekten beinhaltet.

8. Wachstumsverfahren von Nanomaterial auf einem dünnen Blatt nach einem der Ansprüche 1 bis 6, **dadurch gekennzeichnet, dass** die Nanoobjekte Nano-Kohlenstoffröhren sind, wobei die Schicht aus aktivem Material ein metallisches Element sein kann, welches Eisen sein kann.

9. Wachstumsverfahren von Nanomaterial auf einem dünnen Blatt nach einem der Ansprüche 1 bis 6, **dadurch gekennzeichnet, dass** die Nanoobjekte Nanofäden aus Silizium sind, wobei die Schicht aus aktivem Material ein metallisches Element sein kann, welches Kupfer oder Gold sein kann.

10. Wachstumsverfahren von Nanomaterial auf einem dünnen Blatt nach einem der Ansprüche 1 bis 6, **dadurch gekennzeichnet, dass** das Nanomaterial Graphen ist, wobei die Schicht aus aktivem Material aus Siliziumkarbid bestehen kann.

11. Wachstumsverfahren von Nanomaterial auf einem dünnen Blatt nach einem der Ansprüche 1 bis 10, **dadurch gekennzeichnet, dass** die Schutzschicht eine Schicht aus Metall ist, welches aus Wolfram oder Platin bestehen kann.

12. Wachstumsverfahren von Nanomaterial auf einem dünnen Blatt nach Anspruch 11, **dadurch gekennzeichnet, dass** die Dicke der Schutzschicht in der Größenordnung von 1 bis 2 Mikrometern liegt.

13. Wachstumsverfahren von Nanomaterial auf einem dünnen Blatt nach einem der Ansprüche 1 bis 12, **dadurch gekennzeichnet, dass** die Dicke der Harzschicht zwischen ungefähr 0,5 Mikrometer und 1,5 Mikrometern beträgt.

14. Wachstumsverfahren von Nanomaterial auf einem dünnen Blatt nach einem der Ansprüche 1 bis 13, **dadurch gekennzeichnet, dass** es Folgendes beinhaltet:
- einen Schritt des Gravierens der Anordnung: Schutzschicht, des Harzes und des Substrates zum Definieren eines dünnen Blattes in dem Substrat;
- Extraktion des dünnen Blattes aus dem Substrat;
- Übertragung des dünnen Blattes auf einen Träger;
- Wachstum des Nanomaterials auf dem zuvor definierten Blatt auf dem Träger, welcher ein MET-Gitter sein kann.

15. Wachstums verfahren von Nanomaterial auf einem dünnen Blatt nach einem der Ansprüche 1 bis 14, **dadurch gekennzeichnet, dass** es Folgendes beinhaltet:
- einen ersten Schritt des Gravierens zum Definieren eines ersten Blattes;
- einen zweiten Schritt des Gravierens zum Definieren eines dünnen Blattes anhand des ersten Blattes, das im Zuge des zweiten Gravurschrittes verschmälert wird.

16. Wachstumsverfahren von Nanomaterial auf einem dünnen Blatt nach einem der Ansprüche 14 und 15, **dadurch gekennzeichnet, dass** der zweite Gravurschritt nach dem Übertragen des ersten Blattes auf den Träger und vor dem Schritt des Wachstums von Nanomaterial erfolgt.

17. Wachstumsverfahren von Nanomaterial auf einem dünnen Blatt nach einem der Ansprüche 14 bis 16, **dadurch gekennzeichnet, dass** die Extraktion durch Schweißen und Betätigen einer Spitze an dem dünnen Blatt oder dem ersten Blatt erfolgt.

18. Wachstums verfahren von Nanomaterial auf einem dünnen Blatt nach einem der Ansprüche 14 bis 16, **dadurch gekennzeichnet, dass** die Übertragung durch Schweißen auf den Träger erfolgt.

## Claims

1. Method for growing nanomaterial on a thin lamella, having a thickness that can typically be less than about some hundred nanometres **characterised in that** it comprises:
- the deposition of a resin layer (22) on a substrate (20);
- said substrate being covered in a layer of catalyst active material (21) intended for growing nanomaterial, upon which the resin layer is deposited;
- the deposition of a protective layer (23) onto the surface of said resin layer;
- local etching of the protective layer, of the resin and of the substrate in such a way as to define a thin lamella in said substrate;
- the removal of the protective layer/resin layer assembly, from the surface of said thin lamella;
- the growth of nanomaterial on said predefined thin lamella.

2. Method for growing nanomaterial on a thin lamella according to claim 1, **characterised in that** the etching is an ion etching.

3. Method for growing nanomaterial on a thin lamella according to claim 1, **characterised in that** the etching is a plasma etching.

4. Method for growing nanomaterial on a thin lamella according to one of claims 1 to 3, **characterised in that** it comprises an operation of mechanical removal of the protective layer/resin layer assembly that can be implemented with a mechanical part that can be a tip.

5. Method for growing nanomaterial on a thin lamella according to claim 4, **characterised in that** it comprises a preliminary step of defining a notch in the protective layer/resin layer assembly in such a way as to weaken said assembly before the operation of mechanical removal.

6. Method for growing nanomaterial on a thin lamella according to one of claims 1 to 5, **characterised in that** the deposition of the protective layer onto the resin is realised by dissociation of gas molecules by ion or electron beam.

7. Method for growing nanomaterial on a thin lamella according to one of claims 1 to 6, **characterised in that** it comprises the growth of nano-objects.

8. Method for growing nanomaterial on a thin lamella according to one of claims 1 to 6, **characterised in that** the nano-objects are carbon nanotubes, the layer of active material can be of a metal element that can be iron.

9. Method for growing nanomaterial on a thin lamella according to one of claims 1 to 6, **characterised in that** the nano-objects are silicon nanowires, the layer of active material can be of a metal element that can be copper or gold.

10. Method for growing nanomaterial on a thin lamella according to one of claims 1 to 6, **characterised in that** the nanomaterial is graphene, the layer of active material can be of silicon carbide.

11. Method for growing nanomaterial on a thin lamella according to one of claims 1 to 10, **characterised in that** the protective layer is a metal layer that can be of tungsten or platinum.

12. Method for growing nanomaterial on a thin lamella according to claim 11, **characterised in that** the thickness of the protective layer is in the order of 1 to 2 microns.

13. Method for growing nanomaterial on a thin lamella according to one of claims 1 to 12, **characterised in that** the thickness of the resin layer ranges between about 0.5 microns and 1.5 microns.

14. Method for growing nanomaterial on a thin lamella according to one of claims 1 to 13, **characterised in that** it comprises:
- an operation of etching the assembly: protective layer, resin and substrate to define a thin lamella in said substrate;
- the extraction of said thin lamella of said substrate;
- the transfer of said thin lamella onto a support;
- the growth of nanomaterial on said lamella predefined and transferred onto said support that can be a TEM grid.

15. Method for growing nanomaterial on a thin lamella according to one of claims 1 to 14, **characterised in that** it comprises:
- a first etching operation to define a first lamella;
- a second etching operation, to define a thin lamella based on the first thinned lamella during the second etching operation.

16. Method for growing nanomaterial on a thin lamella according to claims 14 and 15, **characterised in that** the second etching operation is implemented after the transfer of said first lamella onto said support and before the operation of growing nanomaterial.

17. Method for growing nanomaterial on a thin lamella according to one of claims 14 to 16, **characterised in that** said extraction is implemented by soldering and actuation of a tip on said thin lamella or said first lamella.

18. Method for growing nanomaterial on a thin lamella according to one of claims 14 to 16, **characterised in that** said transfer is implemented by soldering on said support.
